(19) Europäisches Patentamt
European Patent Office
Office européen des brevets

(11) **EP 3 050 439 B1**

(12) **EUROPEAN PATENT SPECIFICATION**

(45) Date of publication and mention
of the grant of the patent:
**04.11.2020  Bulletin 2020/45**

(51) Int Cl.:
***A23L 7/109*** *(2016.01)*    ***A23P 20/10*** *(2016.01)*
***A23P 30/20*** *(2016.01)*    ***A23L 7/113*** *(2016.01)*
***A23L 23/00*** *(2016.01)*

(21) Application number: **14849636.7**

(22) Date of filing: **25.09.2014**

(86) International application number:
**PCT/JP2014/075361**

(87) International publication number:
**WO 2015/046291 (02.04.2015 Gazette 2015/13)**

(54) **METHOD FOR MANUFACTURING COOKED FRESH PASTA WITH SAUCE**

VERFAHREN ZUR HERSTELLUNG GEKOCHTER FRISCHER TEIGWAREN MIT SOSSE

PROCÉDÉ DE FABRICATION DE PÂTES FRAÎCHES CUITES AVEC DE LA SAUCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.09.2013  JP 2013197979**

(43) Date of publication of application:
**03.08.2016  Bulletin 2016/31**

(73) Proprietor: **Nisshin Foods Inc.**
**Tokyo 101-8441 (JP)**

(72) Inventors:
• **SUGA, Youhei**
**Fujimino-shi**
**Saitama 356-8511 (JP)**
• **YAMAGUCHI, Hitomi**
**Fujimino-shi**
**Saitama 356-8511 (JP)**

• **MIYA, Youichirou**
**Fujimino-shi**
**Saitama 356-8511 (JP)**
• **WATANABE, Takenori**
**Fujimino-shi**
**Saitama 356-8511 (JP)**

(74) Representative: **Forstmeyer, Dietmar**
**BOETERS & LIECK**
**Oberanger 32**
**80331 München (DE)**

(56) References cited:
**EP-A1- 0 239 656       CA-A1- 2 857 945
JP-A- S6 094 068       JP-A- H04 262 754
JP-A- S61 141 855       JP-A- S63 167 752
JP-A- 2003 514 559       JP-A- 2004 337 141
US-A- 5 139 808       US-B1- 6 210 735**

## Description

Technical Field

The present invention relates to a method for producing sauce-coated cooked fresh pasta that is stored together with a sauce, and more specifically, relates to a method for producing sauce-coated cooked fresh pasta that is stored together with a sauce and can be consumed as-is or simply by heating, and that is less likely to undergo degradation in quality caused by the infiltration of sauce into the fresh pasta during storage.

Background Art

Fresh pasta is pasta produced from a dough with an indefinite form into various shapes, such as strands (rods) or sheets, and is produced without undergoing a drying step. Since fresh pasta is not subjected to a drying step, it has a high moisture content. Therefore, fresh pasta has a unique texture, more specifically, a soft but resilient texture, which is different from the texture of dried pasta produced by being subjected to a drying step. In general, fresh pasta is produced by a method of first making a pasta ribbon by rolling out a dough by hand or with a rolling machine and then cutting the pasta ribbon into strands, or a method of extruding a dough from small holes in a die, etc. Also, usually, fresh pasta is produced without applying high pressure to the pasta dough because a drying step is unnecessary during production and in order to provide the fresh pasta with its unique soft texture.

Fresh pasta, however, has a high moisture content, and thus has a drawback in that, at the time of working with boil-cooked pasta, pieces of the cooked fresh pasta adhere to one another, thus having significantly poor workability and edibility. Further, if fresh pasta is stored in a state where it is in contact with a food product with high flowability such as a sauce, moisture, etc. transfers to the fresh pasta, thus destroying the resilience of fresh pasta and making the texture too soft. This tendency is significant particularly when fresh pasta is stored in a freezer because the storage period is generally longer than when it is stored in a refrigerator, and degradation in quality is also caused by freezing and thawing.

Lasagna is a type of sheet-shaped pasta or the name of a food product using the same. A widely-known food product using lasagna sheets is formed by spreading a meat sauce at the bottom of a deep container, placing thereon a boiled sheet of fresh or dried lasagna, then alternately layering the meat sauce and the lasagna sheets, spreading a white sauce on the uppermost layer, and baking the layered product. Since lasagne are sheet-shaped and are arranged in layers, the sheets cling and stick together when fresh pasta is used to produce lasagna sheets. Thus, the aforementioned drawback of fresh pasta has a very large influence, and lasagna obtained is difficult to eat. Also, it was found that the texture characteristic of fresh pasta is significantly degraded.

As a method for preventing degradation in quality during the storage of pasta, Patent Literature 1 discloses cooked pasta prepared by first boiling dried pasta such that it still has an uncooked core, then frying the boiled pasta by immersing it in a high-temperature oil until the core is thoroughly cooked, and after that storing the cooked pasta. Patent Literature 2 describes that, by covering the surface of drained pasta with a moisture-transfer prevention layer including starch, oil, etc., and freezing the pasta in a state where the outer surface of the moisture-transfer prevention layer is covered with a sauce layer, the pasta is prevented from absorbing the moisture of the sauce layer, and thus pasta with a favorable texture can be obtained. CA2857945 discloses preparing pasta dough mainly from wheat flour and 15-35wt% of kneading water, extruding it at a pressure of 80-200kgf/cm2. Pasta is then cooked and frozen, e.g. in combination with sauce. Pasta surface is smooth and texture is improved.

Citation List

Patent Literature

Patent Literature 1: JP S60-192561 A
Patent Literature 2: WO 01/008508

Summary of Invention

The present invention is a method for producing cooked fresh pasta with a sauce, comprising:a fresh pasta preparation step of preparing a dough by adding water to a raw material flour, obtaining a fresh pasta by extruding the dough at a pressure of from 35 to 100 kgf/cm$^2$ (3432327.5-9806650 Pa), and subjecting the surface of the fresh pasta to a dry heating treatment to adjust the mass of the fresh pasta after the treatment to 80 to 97 mass% with respect to the mass of the fresh pasta before the treatment; a cooking step of obtaining cooked fresh pasta by boil-cooking or steam-cooking the fresh pasta after the dry heating treatment; and a sauce-coating step of coating the cooked fresh pasta obtained in the cooking step with a sauce; wherein the raw material flour includes wheat flour as a main component; wherein the degree of pressure reduction during extrusion of the dough is from -600 mm Hg (21331,6 Pa) to vacuum; and wherein the amount of kneading water added with respect to 100 parts by mass of raw material flour is from 15 to 35 parts by mass.

Description of Embodiments

The techniques described in Patent Literatures 1 and 2 cover the surface of pasta with oil, starch, etc., and thus, the pasta has an unfavorable taste and texture.

The present invention relates to a method for producing sauce-coated cooked fresh pasta that has excellent workability during production and edibility, and that also has a favorable texture.

As a result of extensive research to solve the aforementioned problem, Inventors have found that: by producing fresh pasta by extruding a dough at a specific pressure and then subjecting the surface of the fresh pasta to a dry heating treatment, it becomes unnecessary to perform production while paying close attention so that pieces of fresh pasta do not adhere to one another in the subsequent cooking step (boil-cooking) of the fresh pasta, and thus, extremely good workability is achieved; and further, the influence of sauce when the fresh pasta is stored together with a sauce can be suppressed, which makes it possible to obtain fresh pasta that has a resilient, favorable texture and excellent appearance just like pasta immediately after being boiled; thus arriving at the present invention.

A method for producing cooked fresh pasta with a sauce according to the present invention (hereinafter also referred to simply as "production method") involves: a fresh pasta preparation step of preparing a dough by adding water to a raw material flour, obtaining a fresh pasta by extruding the dough at a pressure of from 35 to 100 kgf/cm$^2$ (3432327.5-9806650 Pa), and subjecting the surface of the fresh pasta to a dry heating treatment to adjust the mass of the fresh pasta after the treatment to 80 to 97 mass% with respect to the mass of the fresh pasta before the treatment; a cooking step of obtaining cooked fresh pasta by boil-cooking or steam-cooking the fresh pasta after the dry heating treatment; and a sauce-coating step of coating the cooked fresh pasta obtained in the cooking step with a sauce; wherein the raw material flour includes wheat flour as a main component; wherein the degree of pressure reduction during extrusion of the dough is from -600 mm Hg (21331,6 Pa) to vacuum; and wherein the amount of kneading water added with respect to 100 parts by mass of raw material flour is from 15 to 35 parts by mass. The production method of the present invention usually further involves a step of refrigerating or freezing the sauce-coated cooked fresh pasta.

In the fresh pasta preparation step according to the present invention, a dough is prepared by adding water to a raw material flour. As for the raw material flour, a flour material including wheat flour as a main component is used. Here, "include wheat flour as a main component" means that the content of wheat flour in the flour material is 60 mass% or greater, and the content of wheat flour may be 100 mass%. The wheat flour used for the flour material is not particularly limited so long as it is usable for pastas, and examples include hard wheat flour (bread flour), semi-hard wheat flour, medium-strength wheat flour (all-purpose flour), soft wheat flour (cake flour), durum wheat flour, and durum semolina. The wheat flour may be used singly, or two or more types may be mixed and used.

As for the flour material used in the present invention, in addition to wheat flour, it is possible to blend other raw materials ordinarily used in the production of pastas, such as starches, sugars, eggs, table salt, oils and fats, and/or thickeners. The blending amount of the aforementioned other raw material(s) may be from 0 to 40 parts by mass with respect to 100 parts by mass of wheat flour.

The raw material flour used in the present invention may contain an emulsifier in addition to the aforementioned flour material including wheat flour as a main component. By including an emulsifier in the dough, the adhesion between pieces of pasta and degradation in quality during storage can be prevented even more effectively. Any emulsifier, either solid or liquid, may be used without particular limitation so long as it is edible, and examples include glycerol fatty acid esters, polyglycerol fatty acid esters, sucrose fatty acid esters, sorbitan fatty acid esters, phospholipids such as lecithin and sphingomyelin, propylene glycol fatty acid esters, or decomposed products thereof. Among the above, sucrose fatty acid esters and lecithin are preferred. The content of the emulsifier in the raw material flour, in terms of solid content, is preferably from 0.2 to 2 parts by mass, more preferably from 0.5 to 1.5 parts by mass, even more preferably from 0.8 to 1.2 parts by mass, with respect to 100 parts by mass of the flour material in the raw material flour.

In the fresh pasta preparation step according to the present invention, as for the water (kneading water) added to the raw material flour in preparing the dough, water ordinarily used for the production of pastas/noodles, such as water, salt water, or brine, may be used without particular limitation. Considering that a high extrusion pressure is applied to the obtained dough as described below, the amount of kneading water added with respect to 100 parts by mass of raw material flour is from 15 to 35 parts by mass, more preferably from 18 to 35 parts by mass. Dough preparation can be performed according to an ordinary method. For example, a dough can be obtained by adding a predetermined amount of kneading water to the raw material flour, and kneading the mixture.

In the fresh pasta preparation step according to the present invention, fresh pasta is obtained by directly extruding the prepared dough at a pressure (extrusion pressure) of from 35 to 100 kgf/cm$^2$ (3432327.5-9806650 Pa), more preferably from 40 to 80 kgf/cm$^2$ (3922660-7845320 Pa). "Extrusion" as used herein is not particularly limited in terms of the shape of the molded dough; for example, the dough may be extruded into a sheet shape (flat-plate shape), like pasta ribbons, or extruded into a rod shape, like pasta strands. By extruding the dough at a pressure within the aforementioned specific range, it is possible to obtain fresh pasta with a densified structure, which leads to a favorable texture. If the pressure at the time of extruding the dough is outside the aforementioned specific range, fresh pasta with a favorable texture cannot be obtained. Further, the degree of pressure reduction during extrusion of the dough is from -600 mmHg (21331,6 Pa) to vacuum. Extrusion in the fresh pasta preparation step according to the present invention can be performed by using a known extruder (pasta machine).

In the present invention, the shape of the fresh pasta is not particularly limited, and it is possible to adopt any shape that can be produced by extrusion, such as pasta ribbons or pasta strands. Examples may include long pasta shapes such as spaghetti, short pasta shapes such as macaroni and penne, and sheet shapes such as lasagna.

In the fresh pasta preparation step according to the present invention, the surface of the fresh pasta obtained by extruding the dough is subjected to a dry heating treatment to adjust the mass of the fresh pasta after the treatment to 80 to 97 mass%, preferably from 90 to 95 mass%, with respect to the mass of the fresh pasta before the treatment. By subjecting the fresh pasta to this dry heating treatment, pieces of fresh pasta are less likely to adhere to one another in the subsequent boil-cooking of the fresh pasta, and workability during production is improved. Also, edibility is improved, and pieces of fresh pasta are less likely to adhere to one another at the time of consumption, and a more resilient, favorable texture can be obtained.

The dry heating treatment according to the present invention is a treatment in which the quality of fresh pasta is altered by heating the fresh pasta by employing a specific heating method and at a specific heating temperature. The dry heating treatment is different from a mere drying treatment (for example, drying treatment using a constant temperature oven as in Comparative Examples 4 to 9 described below) in which the moisture of the fresh pasta is reduced. In the fresh pasta subjected to the dry heating treatment according to the present invention, it is surmised that only the surface-layer section, including the surface, is mainly heated and altered in quality, whereas sections located inward of the surface-layer section are less affected by heating compared to the surface-layer section. Further, it is surmised that this change in structure of the surface-layer section of the fresh pasta leads to an improvement in workability during production and in edibility, and to a favorable texture. Examples of preferred embodiments of the dry heating treatment according to the present invention include: methods employing a solid contact-heating medium, such as metal or stone, as a heating medium; and methods employing a non-contact heating medium such as a flame, infrared radiation, or far-infrared radiation. More specifically, an example of the dry heating treatment involves baking fresh pasta at a product temperature of 140°C or higher, preferably from 160 to 260°C, more preferably from 170 to 240°C, by employing a heating method such as oven heating, jet-oven heating, heating with a heater, or heating by firing. Herein, "baking" refers to a heat treatment of heating fresh pasta without adding moisture. Note, however, that the dry heating treatment of the present invention does not encompass so-called drying treatments employing convective air or air currents at temperatures at which the product temperature of the fresh pasta is rendered below 140°C by the drying treatments. The dry heating treatment of fresh pasta is continued until the mass of the fresh pasta after the treatment is reduced to 80 to 97 mass% with respect to the mass of the fresh pasta before the treatment.

In the cooking step according to the present invention, the fresh pasta after the dry heating treatment that has been obtained in the aforementioned fresh pasta preparation step is subjected to boil-cooking or steam-cooking to obtain cooked fresh pasta. Any ordinary boil-cooking method may be employed for boil-cooking the fresh pasta. Generally, the fresh pasta is boiled and cooked in boiling water for 2 to 8 minutes. It is preferable that the fresh pasta is boiled and cooked such that the yield-after-boiling is from about 190 to 250%, preferably from about 200 to 220%. In this way, it is possible to effectively prevent texture from significantly deteriorating when the boiled-and-cooked fresh pasta is stored together with a sauce. The cooked fresh pasta obtained by boil-cooking is cooled and drained as necessary, and is then refrigerated or frozen together with a sauce. As for steam-cooking, it is possible to employ any method employed for steam-cooking this type of noodle/pasta without particular limitation. Generally, the fresh pasta may be steamed with a steamer for 5 to 15 minutes.

It should be noted that, in the production method of the present invention, the cooked fresh pasta obtained in the cooking step is usually coated with a sauce in a subsequent step (sauce-coating step), but instead of performing this sauce-coating step, the fresh pasta after the dry heating treatment can be coated with a sauce by boiling the fresh pasta after the dry heating treatment in a sauce at the time of boil-cooking the fresh pasta in the cooking step. The fresh pasta obtained through the aforementioned dough extrusion and dry heating treatment is less likely to soften for absorbing an excessive amount of sauce or moisture from sauce, and thus, the fresh pasta can be boiled and cooked using a sauce. By employing this boil-cooking method, the sauce-coating step can be omitted, and the production steps can be simplified. Note, however, that from the viewpoint of the aforementioned yield-after-boiling of the fresh pasta and the viewpoint of appropriately adjusting the later-described quantitative relationship between the fresh pasta and sauce, it is preferable not to employ boil-cooking using a sauce but to boil and cook the fresh pasta separately from a sauce.

In the sauce-coating step according to the present invention, the cooked fresh pasta obtained in the cooking step is coated with a sauce. The style/form according to which the pasta is coated with a sauce is usually the same as the style/form when the intended pasta dish is consumed. For example, in the case of lasagna in which the fresh pasta has a sheet-like shape, sheets of cooked fresh pasta and layers of sauce spread on the sheets are layered alternately, like the style/form of an ordinary lasagna dish. The proportions of the cooked fresh pasta and sauce for coating the pasta may be proportions ordinarily employed depending on the type of dish (type of fresh pasta) to be cooked. For example, for spaghetti (long pasta), about 20 to 200 parts by mass of sauce is used with respect to 100 parts by mass of cooked fresh pasta. For gratin (macaroni or short pasta), about 170 to 330 parts by mass of sauce is used with respect to 100 parts by mass of cooked fresh pasta. For lasagna (sheet-shaped pasta), about 100 to 600 parts by mass of sauce is used with respect to 100 parts by mass of cooked fresh pasta. For soup pasta (macaroni or short pasta), about 450 to 900 parts by mass of sauce is used with respect to 100 parts by mass of cooked fresh pasta. The production method of the present invention is applicable to pasta dishes in which the proportion of sauce (soup) is relatively large, such as soup pasta and gratin.

Any ordinary pasta sauce may be used as a sauce for coating the cooked fresh pasta. Either sauce with a relatively high viscosity or sauce with a relatively low viscosity, like sauce (soup) used for soup pasta, may be used. Examples include, but are not limited to: white sauce, such as cream sauce, béchamel sauce, and carbonara sauce; tomato-based sauce, such as meat sauce, Neapolitan-style sauce, and arrabbiata sauce; brown sauce; oil-based sauce; and soups, such as corn soup and minestrone soup.

In the production method of the present invention, after the sauce-coating step (or after the cooking step when the fresh pasta after the dry heating treatment is boiled in a sauce at the time of boil-cooking the fresh pasta in the cooking step), the cooked fresh pasta coated with the sauce can be refrigerated or frozen. The sauce-coated cooked fresh pasta of the present invention can be prevented from adhering to one another and from being affected by the infiltration of sauce, etc. during storage, and thus, has a favorable appearance and texture when reheated and consumed. The fresh pasta may be refrigerated or frozen by employing, as appropriate, a refrigeration method or freezing method ordinarily used for the production of this type of refrigerated/frozen pasta. To refrigerate the cooked fresh pasta, it is possible to employ an ordinary refrigeration method, such as a method of cooling the pasta to a chilled storage temperature (10°C or below). It should be noted that it will suffice if the temperature of the cooled pasta is 10°C or below, but more specifically, it is preferable if the temperature of the cooled pasta is from 10°C to around -5°C. Also, the cooling rate is not particularly limited, but it is preferable to perform cooling as quick as possible; for example, it is preferable to perform cooling at a rate of about 0.5 to 20°C/minute. On the other hand, to freeze the cooked fresh pasta, either quick-freezing or slow-freezing may be employed, but quick-freezing is particularly preferable. Once the sauce-coated cooked fresh pasta has been frozen by quick-freezing, the fresh pasta may be stored under ordinary frozen storage conditions.

It should be noted that, in the production method of the present invention, depending on the type of pasta dish (type of fresh pasta), e.g. if the intended pasta dish is a gratin or lasagna, the sauce-coated cooked fresh pasta may be baked, as necessary, before refrigerating or freezing the sauce-coated cooked fresh pasta in order to provide flavor or to brown the top. Baking is performed preferably at a temperature from 180°C to 250°C, more preferably from 200°C to 230°C. It is preferable that the baking time is from 5 to 20 minutes, more preferably from 7 to 15 minutes, in the aforementioned baking temperature range. An oven, for example, may be used for baking.

The cooked fresh pasta with a sauce obtained by performing the production method of the present invention is usually stored refrigerated or frozen. At the time of consumption, it is preferable to subject the refrigerated/frozen fresh pasta to a heating treatment. The heating treatment at the time of consumption may be performed according to an ordinary method using an oven, a microwave oven, a steam oven, or the like.

Examples

The present invention is described in further detail below by way of examples. The scope of the invention, however, is not limited to the examples.

Example 1

Thirty four (34) parts by mass of water was mixed with 100 parts by mass of durum wheat flour (Duelio from Nisshin Flour Milling Inc.), and the mixture was kneaded to prepare a dough. Using a pasta machine, the prepared dough was extruded under a reduced-pressure condition of -600 mmHg (21331,6 Pa) at an extrusion pressure of 60 kgf/cm$^2$ (5883990 Pa) into a sheet having a thickness of 1.5 mm. The sheet was cut out into a 90 mm × 90 mm square shape in a planar view, to obtain a sheet-shaped fresh pasta (lasagna sheet). The lasagna sheet was subjected to a dry heating treatment by baking the sheet at a temperature of 220°C using a jet oven (from Lincoln). The dry heating treatment was performed until the percentage (%) of the mass of the fresh pasta after the treatment with respect to the mass of the fresh pasta before the treatment (= [mass of fresh pasta after dry heating treatment/mass of fresh pasta before dry heating treatment] × 100) took on the value shown in Table 1 below. The lasagna sheet after the dry heating treatment was boiled and cooked in boiling water such that the yield-after-boiling was 205%, thus obtaining a cooked lasagna sheet (cooked fresh pasta).

This cooked lasagna sheet was coated with sauce and was then frozen, to produce a frozen cooked lasagna (sauce-coated cooked fresh pasta). More specifically, a cooked lasagna was produced by preparing a gratin tray, filling the bottom of the tray with a white sauce (from Nisshin Foods Inc.), placing one cooked lasagna sheet on the white sauce, spreading a meat sauce (from Nisshin Foods Inc.) over the upper surface of the lasagna sheet, placing another cooked lasagna sheet on the meat sauce, and spreading the white sauce over the upper surface of this other cooked lasagna sheet. The amount of white sauce used was 180 parts by mass with respect to the total amount of lasagna sheets, and the amount of meat sauce used was 80 parts by mass with respect to the total amount of lasagna sheets. The cooked lasagna obtained as above was subjected to quick-freezing at -35°C, to produce the intended frozen cooked lasagna.

Examples 2 to 5 and Comparative Examples 1 and 2

Frozen cooked lasagne were produced in the same way as in Example 1, except that, in the dry heating treatment, the percentage of the mass of the fresh pasta after the treatment with respect to the mass of the fresh pasta before the treatment was changed as appropriate.

Comparative Example 3

A frozen cooked lasagna was produced in the same way as in Example 1, except that no dry heating treatment was performed.

Comparative Examples 4 to 9

No dry heating treatment was performed, and instead, the lasagna sheet was subjected to a drying treatment (non-dry heating treatment) at a temperature of 70°C using a constant temperature oven (from Espec Corp.). This drying treatment was performed until the percentage (%) of the mass of the fresh pasta (lasagna sheet) after the treatment with respect to the mass of the fresh pasta before the treatment (= [mass of fresh pasta after drying treatment/mass of fresh pasta before drying treatment] × 100) took on the value shown in Table 1 below. Except for these points, frozen cooked lasagne were produced in the same way as in Example 1.

Test Example 1

For each lasagna sheet (fresh pasta), which is an intermediate product in each Example and Comparative Example, the adhesion rate between lasagna sheets at the time of boil-cooking was evaluated as follows. One hundred (100) lasagna sheets to be evaluated were prepared, and the sheets were boiled and cooked in boiling water such that the yield-after-boiling was 205%. Then, a laminate of sheets, in which a plurality of lasagna sheets adhered to one another with an adhesion force that did not allow the sheets to be peeled apart easily with the fingers, was sampled. The proportion of sections where a plurality of lasagna sheets adhered to one another in the laminate of sheets (i.e., the proportion of adhesion in a single lasagna sheet) was found in units of 0.1, assuming that the area of a single lasagna sheet was 1, and the adhesion rate was calculated according to the following equation. The results are shown in Table 1 below. When the value of the adhesion rate is smaller, the pasta sheets are less likely to adhere to one another at the time of boil-cooking and the workability during production is better, resulting in a higher rating.

$$\text{Adhesion rate (\%)} = \{([\text{Proportion of adhesion in single lasagna sheet in laminate of sheets}] + [\text{proportion of adhesion in another single lasagna sheet in laminate of sheets}] + [\text{proportion of adhesion in yet another single lasagna sheet in laminate of sheets}] + ...)/\text{total number of boiled-and-cooked lasagna sheets (i.e., 100)}\} \times 100.$$

Test Example 2

Each frozen cooked lasagna (sauce-coated cooked fresh pasta), which was the final product in each Example and Comparative Example, was stored at -18°C for one week and was then thawed with a microwave oven (at 600 W for 4 minutes and 30 seconds), and sections where the lasagna sheets did not adhere to one another were taken out with a spoon, and the texture of the taken-out sections was evaluated by 10 panelists according to the following evaluation criteria. The results (average score of 10 panelists) are shown in Table 1 below.

Criteria for Evaluating Texture:

5: Pasta is sufficiently soft and resilient, and has extremely favorable texture.

4: Pasta is soft and resilient, and has favorable texture.

3: Pasta is relatively resilient, and has no problem in texture.

2: Pasta slightly lacks resilience or is slightly hard, and has slightly poor texture.

1: Pasta lacks resilience or is hard, and has poor texture.

[Table 1]

| | Comp. Example 1 | Example 1 | Example 2 | Example 3 | Example 4 | Example 5 | Comp. Example 2 |
|---|---|---|---|---|---|---|---|
| Method for treating fresh pasta before boil-cooking | Dry heating treatment*1 | Dry heating treatment*1 | Dry heating treatment*1 | Dry heating treatment*1 | Dry heating treatment*1 | Dry heating treatment*1 | Dry heating treatment*1 |
| Percentage of mass of fresh pasta after treatment with respect to mass of fresh pasta before treatment (%) | 75 | 80 | 87 | 90 | 95 | 97 | 99 |
| Evaluation — Adhesion rate (%) | 14.1 | 14.5 | 14.6 | 14.6 | 15.2 | 20.3 | 80.3 |
| Evaluation — Texture | 2.3 | 3.6 | 4.0 | 4.3 | 4.4 | 4.4 | 4.5 |

| | Comp. Example 3 | Comp. Example 4 | Comp. Example 5 | Comp. Example 6 | Comp. Example 7 | Comp. Example 8 | Comp. Example 9 |
|---|---|---|---|---|---|---|---|
| Method for treating fresh pasta before boil-cooking | No treatment | Non-dry heating treatment *2 | Non-dry heating treatment *2 | Non-dry heating treatment *2 | Non-dry heating treatment *2 | Non-dry heating treatment *2 | Non-dry heating treatment *2 |
| Percentage of mass of fresh pasta after treatment with respect to mass of fresh pasta before treatment (%) | - | 75 | 80 | 87 | 90 | 95 | 97 |
| Evaluation — Adhesion rate (%) | 95.1 | 50.2 | 63.4 | 83.8 | 88.1 | 89.9 | 92.0 |
| Evaluation — Texture | 4.6 | 2.8 | 3.1 | 3.6 | 4.0 | 4.4 | 4.4 |

*1: Baking at 220°C using jet oven.
*2: Drying at 70°C using constant temperature oven.

As is clear from Table 1, in Comparative Example 1, in the dry heating treatment, the percentage of the mass of the fresh pasta after the treatment with respect to the mass of the fresh pasta before the treatment was below the lower limit value (80 mass%) of the aforementioned specific range, thus resulting in poorer texture than the Examples. In Comparative Example 2, the aforementioned percentage was above the upper limit value (97 mass%) of the aforementioned specific range, thus resulting in a poorer adhesion rate than the Examples. Further, in Comparative Example 3, no treatment was applied to the fresh pasta before boil-cooking, and in Comparative Examples 4 to 9, merely drying treatment, which was not a dry heating treatment, was performed. As a result, these Comparative Examples were inferior to the Examples at least in terms of adhesion rate. Test Example 2 yielded the shown results because the section that was consumed and evaluated was a section where the lasagna sheets did not adhere to one another; in the Comparative Examples, however, the texture of the whole lasagna food product, which included many adhesion sections, was considerably poorer than the Examples. From the above, it is understood that, in order to improve workability during production by reducing the adhesion rate and to improve the texture of lasagna (fresh pasta), it is effective to subject fresh pasta before boil-cooking to a dry heating treatment and adjust the mass of the fresh pasta after the treatment to 80 to 97 mass% with respect to the mass of the fresh pasta before the treatment.

Examples 6 to 9 and Comparative Examples 10 and 11

Frozen cooked lasagne were produced in the same way as in Example 4, except that the pressure for extruding the dough was changed as appropriate. For each of the Examples and Comparative Examples, the adhesion rate was evaluated according to the aforementioned Test Example 1, and the texture was evaluated according to the aforementioned Test Example 2. The results are shown in Table 2 below. Additionally, Table 2 below also shows the results of Example 4 from the viewpoint of facilitating the understanding of the influence of the extrusion pressure on the evaluated items.

[Table 2]

| | Comp. Example 10 | Example 6 | Example 7 | Example 4 | Example 8 | Example 9 | Comp. Example 11 |
|---|---|---|---|---|---|---|---|
| Dough extrusion pressure (kgf/cm$^2$) | 30 | 35 | 40 | 60 | 80 | 100 | 110 |
| Method for treating fresh pasta before boil-cooking | Dry heating treatment[1] | Dry heating treatment[1] | Dry heating treatment[1] | Dry heating treatment[1] | Dry heating treatment[1] | Dry heating treatment[1] | Dry heating treatment[1] |
| Percentage of mass of fresh pasta after treatment with respect to mass of fresh pasta before treatment (%) | 95 | 95 | 95 | 95 | 95 | 95 | 95 |
| Evaluation — Adhesion rate (%) | 16.9 | 16.6 | 15.8 | 15.2 | 15.3 | 15.3 | 15.1 |
| Evaluation — Texture | 3.0 | 3.7 | 3.9 | 4.4 | 4.1 | 3.9 | 3.1 |

*1: Baking at 220°C using jet oven.
**conversion from kgf/cm$^2$ to Pascal is by multiplying with factor 98066.5

As is clear from Table 2, in Comparative Examples 10 and 11, the pressure for extruding the dough at the time of producing fresh pasta is outside the aforementioned specific range (from 35 to 100 kgf/cm² corresponding to 3432327.5 - 9806650 Pa) thus resulting in particularly poor texture compared to the Examples. From the above, it is understood that, in order to improve the texture of lasagna, merely subjecting fresh pasta before boil-cooking to a dry heating treatment is not enough, and it is also necessary to set the extrusion pressure of the dough within the aforementioned specific range.

Examples 10 to 15

A raw material flour further containing an emulsifier in addition to wheat flour (flour material) was used. More specifically, a raw material flour, in which a predetermined amount of a sucrose fatty acid ester (Ryoto Sugar Ester S-1170 from Mitsubishi-Kagaku Foods Corporation) was blended as an emulsifier with respect to 100 parts by mass of durum wheat flour (Duelio from Nisshin Flour Milling Inc.), was used. Except for this point, frozen cooked lasagne were produced in the same way as in Example 4. For each of the Examples, the adhesion rate was evaluated according to the aforementioned Test Example 1, and the texture was evaluated according to the aforementioned Test Example 2. The results are shown in Table 3 below. Additionally, Table 3 below also shows the results of Example 4 from the viewpoint of facilitating the understanding of the influence of an emulsifier on the evaluated items.

[Table 3]

| | Example 4 | Example 10 | Example 11 | Example 12 | Example 13 | Example 14 | Example 15 |
|---|---|---|---|---|---|---|---|
| Content of emulsifier in raw material flour*3 | 0 | 0.1 | 0.2 | 0.5 | 1.0 | 2.0 | 3.0 |
| Dough extrusion pressure (kgf/cm$^2$) | 60 | 60 | 60 | 60 | 60 | 60 | 60 |
| Method for treating fresh pasta before boil-cooking | Dry heating treatment*1 | Dry heating treatment*1 | Dry heating treatment*1 | Dry heating treatment*1 | Dry heating treatment*1 | Dry heating treatment*1 | Dry heating treatment*1 |
| Percentage of mass of fresh pasta after treatment with respect to mass of fresh pasta before treatment (%) | 95 | 95 | 95 | 95 | 95 | 95 | 95 |
| Evaluation — Adhesion rate (%) | 15.2 | 15.2 | 6.5 | 3.3 | 3.2 | 3.2 | 3.1 |
| Evaluation — Texture | 4.4 | 4.4 | 4.3 | 4.3 | 4.3 | 4.0 | 3.1 |

*1: Baking at 220°C using jet oven.
*3: Parts by mass with respect to 100 parts by mass of wheat flour (flour material).
**conversion from kgf/cm$^2$ to Pascal is by multiplying with factor 98066.5

EP 3 050 439 B1

12

As is clear from Table 3, it is understood that, by setting the content of the emulsifier (sucrose fatty acid ester) in the raw material flour to 0.2 parts by mass or greater with respect to 100 parts by mass of wheat flour (flour material) (Examples 11 to 15), the adhesion rate dropped dramatically, and workability during production improved tremendously. However, degradation in lasagna texture was seen when the content of the emulsifier in the raw material flour exceeded 2 parts by mass with respect to 100 parts by mass of wheat flour (flour material) (Example 15). From the above, it is understood that, in order to achieve a good balance between reduction in adhesion rate and improvement in texture, it is preferable to include an emulsifier in the raw material flour and to set the content of the emulsifier to around 0.2 to 2 parts by mass with respect to 100 parts by mass of wheat flour (flour material).

Industrial Applicability

According to the method for producing sauce-coated cooked fresh pasta of the present invention, it is possible to obtain sauce-coated cooked fresh pasta that has excellent workability during production and edibility and that also has a favorable texture.

**Claims**

1.   A method for producing cooked fresh pasta with a sauce, comprising:

   a fresh pasta preparation step of

   preparing a dough by adding water to a raw material flour,
   obtaining a fresh pasta by extruding the dough at a pressure of from 35 to 100 kgf/cm$^2$ (3432327.5-9806650 Pa), and
   subjecting the surface of the fresh pasta to a dry heating treatment to adjust the mass of the fresh pasta after the treatment to 80 to 97 mass% with respect to the mass of the fresh pasta before the treatment;

   a cooking step of obtaining cooked fresh pasta by boil-cooking or steam-cooking the fresh pasta after the dry heating treatment; and
   a sauce-coating step of coating the cooked fresh pasta obtained in the cooking step with a sauce;
   wherein the raw material flour includes wheat flour as a main component;
   wherein the degree of pressure reduction during extrusion of the dough is from -600 mmHg (21331,6 Pa) to vacuum; and
   wherein the amount of kneading water added with respect to 100 parts by mass of raw material flour is from 15 to 35 parts by mass.

2.   The method for producing cooked fresh pasta with a sauce according to claim 1, wherein:

   the raw material flour contains an emulsifier, and a flour material including wheat flour as a main component; and
   the content of the emulsifier is from 0.2 to 2 parts by mass with respect to 100 parts by mass of the flour material.

3.   The method for producing cooked fresh pasta with a sauce according to claim 1 or 2, wherein the fresh pasta has a sheet-like shape.

**Patentansprüche**

1.   Verfahren zur Herstellung gekochter frischer Nudeln mit einer Sauce, umfassend:

   einen Schritt zur Herstellung frischer Nudeln mit Zubereitung eines Teigs durch Zugabe von Wasser zu Mehl als Rohstoff,
   Erhalten von frischen Nudeln durch Extrudieren des Teigs bei einem Druck von 35 bis 100 kgf/cm$^2$ (3432327.5-9806650 Pa) und Unterziehen der Oberfläche der frischen Nudeln einer Behandlung mit trockener Erwärmung, um die Masse der frischen Nudeln nach der Behandlung auf 80 bis 97 Massen-% in Bezug auf die Masse der frischen Nudeln vor der Behandlung einzustellen;
   einen Kochschritt zum Erhalten gekochter frischer Nudeln durch Kochen oder Dampfgaren der frischen Nudeln nach der Behandlung mit trockener Erhitzung; und

ein Saucenbeschichtungsschritt zum Beschichten der gekochten frischen Nudeln, die im Kochschritt erhalten wurden, mit einer Sauce;
wobei der Mehl-Rohstoff Weizenmehl als Hauptbestandteil enthält;
wobei der Grad der Druckreduzierung während der Extrusion des Teigs von -600 mmHg (21331,6 Pa) bis Vakuum beträgt; und
wobei die Menge an Knetwasser, die in Bezug auf 100 Massenteile Mehl-Rohstoff hinzugefügt wird, 15 bis 35 Massenteile beträgt.

2. Verfahren zur Herstellung gekochter frischer Nudeln mit einer Sauce nach Anspruch 1, wobei:
der Mehl-Rohstoff einen Emulgator und ein Mehlmaterial enthält, das Weizenmehl als Hauptbestandteil enthält; und der Gehalt des Emulgators 0,2 bis 2 Massenteile in Bezug auf 100 Massenteile des Mehlmaterials beträgt.

3. Verfahren zur Herstellung gekochter frischer Nudeln mit einer Sauce nach Anspruch 1 oder 2, wobei die frischen Nudeln eine blattartige Form haben.

**Revendications**

1. Procédé de production de pâtes fraîches cuites avec une sauce, comprenant:

une étape de préparation de pâtes fraîches de
préparer une pâte en ajoutant de l'eau à une farine de matière première,
obtenir des pâtes fraîches en extrudant la pâte à une pression de 35 à 100 kgf/cm$^2$ (3432327.5-9806650 Pa), et
soumettre la surface des pâtes fraîches à un traitement de chauffage à sec pour ajuster la masse des pâtes fraîches après le traitement à 80 à 97% en masse par rapport à la masse des pâtes fraîches avant le traitement;
une étape de cuisson consistant à obtenir des pâtes fraîches cuites par cuisson à ébullition ou cuisson à la vapeur des pâtes fraîches après le traitement de chauffage à sec; et
une étape d'enrobage de sauce pour enrober les pâtes fraîches cuites obtenues dans l'étape de cuisson avec une sauce;
dans lequel la farine de matière première comprend de la farine de blé en tant que composant principal;
dans lequel le degré de réduction de pression pendant l'extrusion de la pâte est de -600 mmHg (21331,6 Pa) au vide; et
dans lequel la quantité d'eau de pétrissage ajoutée par rapport à 100 parties en masse de farine de matière première est de 15 à 35 parties en masse.

2. Procédé de production de pâtes fraîches cuites avec une sauce selon la revendication 1, dans lequel:

la farine de matière première contient un émulsifiant et une matière de farine comprenant de la farine de blé comme composant principal; et
la teneur en émulsifiant est de 0,2 à 2 parties en masse par rapport à 100 parties en masse de farine.

3. Procédé de production de pâtes fraîches cuites avec une sauce selon la revendication 1 ou 2, dans lequel les pâtes fraîches out une forme en forme de feuille.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2857945
- JP S60192561 A

- WO 01008508 A